# EUROPÄISCHE PATENTANMELDUNG

(11) **EP 1 621 857 A2**
(43) Veröffentlichungstag der Anmeldung: **01.02.2006**
(21) Anmeldenummer: 05405406.9
(22) Anmeldetag: 24.06.2005
(51) Int. Cl.: G01J 3/10, G01J 3/50, G01N 21/25

(54) **Vorrichting zur Bestimmung der Farbvalenz von transluzenten Objekten, insbesondere Zähnen**

(30) Priorität: 29.07.2004 CH 12762004
(71) Anmelder: MHT Optic Research AG, 8155 Niederhasli (CH)
(72) Erfinder: Berner, Markus, 8155 Niederhasli (CH)
(74) Vertreter: Rottmann, Maximilian

(57) **Zusammenfassung**

Eine Vorrichtung zur Bestimmung der Farbvalenz von transluzenten Objekten (M) wie beispielsweise Zähnen (11, 12) ist mit einer Beleuchtungseinrichtung (1) sowie einer Erfassungseinrichtung (2) versehen. Zum Beleuchten des Messobjekts (M) in unterschiedlichen Wellenlängenbereichen umfasst die Beleuchtungseinrichtung (1) eine Leuchtdiodenanordnung (14) mit einer Vielzahl von sequentiell ansteuerbaren Leuchtdioden (15). Es sind mehrere unterschiedliche Leuchtdiodentypen vorgesehen, welche sichtbares Licht in unterschiedlichen Wellenlängenbereichen emittieren.

## Beschreibung

Die Erfindung betrifft eine Vorrichtung zur Bestimmung der Farbvalenz von Objekten nach dem Oberbegriff des Anspruchs 1 sowie ein Verfahren zum Betrieb der Vorrichtung nach dem Anspruch 18.

Aus der EP-A-0 928 957 ist ein Verfahren sowie eine Vorrichtung zur Bestimmung der Farbvalenz von transluzenten Objekten bekannt. Zur Bestimmung der Farbvalenz des transluzenten Messobjekts wird das Messobjekt mit Licht in unterschiedlichen Wellenlängenbereichen beleuchtet oder das vom Messobjekt reflektierte Licht vor der Erfassung mit einem Bildsensor in unterschiedliche Wellenlängenbereiche aufgeteilt. Als Lichtquelle wird eine herkömmliche Lampe eingesetzt. Zum Erzeugen der unterschiedlichen Wellenlängenbereiche wird der Lampe vorzugsweise ein mit einem Beugungsgitter versehener Hohlspiegel nachgeschaltet. Durch Verdrehen des Hohlspiegels wird der in ein nachfolgendes Lichtleiterfaserbündel eingekoppelte Wellenlängenbereich verändert. Vorzugsweise werden zwei Bildsensoren eingesetzt, wobei der eine Bildsensor zum Visualisieren des Messobjekts und der andere Bildsensor zum Ermitteln der farbmetrischen Daten des Messobjekts verwendet wird. Obwohl sich das in dieser Schrift beschriebene Verfahren sowie die zugehörige Vorrichtung bewährt haben, wäre es wünschenswert, wenn die Vorrichtung portabel und handlicher wäre und ausserdem kostengünstiger hergestellt werden könnte.

Die Aufgabe der Erfindung besteht nun darin, die im Oberbegriff des Anspruchs 1 definierte Vorrichtung derart auszubilden, dass sie kostengünstig, leicht und portabel ist, wobei die elektrische Leistungsaufnahme soweit reduziert werden soll, dass sie mittels Batterien oder Akkus betrieben werden kann.

Diese Aufgabe wird mit einer Vorrichtung gelöst, welche mit den Kennzeichen des Anspruchs 1 definierten Merkmalen versehen ist.

Indem die Beleuchtungseinrichtung eine Vielzahl von sequentiell ansteuerbaren Leuchtdioden umfasst, welche Licht in unterschiedlichen Wellenlängenbereichen emittieren, wir die grundsätzliche Voraussetzung geschaffen, die Vorrichtung autonom, d.h. netzunabhängig zu betreiben. Auch wenn Leuchtdioden einen gegenüber Glühlampen nur geringfügig besseren Wirkungsgrad haben, wird dadurch, dass im Gegensatz zu Glühlampen, die gesamte emittierte Lichtleistung des entsprechenden Wellenlängenbereichs zur Messung verwendet werden kann, der optische Wirkungsgrad ca. 20 mal besser, wodurch die Leistungsaufnahme letztlich wesentlich geringer ist und ermöglicht wird, die Vorrichtung mittels Batterien oder Akkus zu speisen. Die Verwendung von Leuchtdioden anstelle einer herkömmlichen Lichtquelle mit nachgeschaltetem, elektromotorisch betriebenem Hohlspiegel hat den weiteren Vorteil, dass die Vorrichtung wesentlich leichter und kompakter ausfällt und zudem kostengünstiger hergestellt werden kann.

Bevorzugte Ausführungsarten der Vorrichtung in den abhängigen Ansprüchen 2 bis 17 umschrieben.

Im Anspruch 18 wird zudem ein Verfahren zum Betrieb der Vorrichtung beansprucht. Die abhängigen Ansprüche 19 bis 23 beschreiben bevorzugte Weiterbildungen des Verfahrens.

Bevorzugte Ausführungsbeispiele der erfindungsgemässen Vorrichtung werden nachfolgend anhand der Zeichnungen näher erläutert. In den Zeichnungen zeigen:
Fig. 1 eine schematische Seitenansicht der Vorrichtung;
Fig. 2 eine schematische Vorderansicht des Messobjekts;
Fig. 3 eine schematische Teilansicht einer weiteren Ausführungsform der Vorrichtung von oben;
Fig. 4 eine schematische Teilansicht der weiteren Ausführungsform der Vorrichtung von der Seite;
Fig. 5 eine weitere schematische Vorderansicht des Messobjekts;
Fig. 6 eine schematische Ansicht einer weiteren Ausführungsform der Vorrichtung von der Seite; und
Fig. 7 eine schematische Ansicht einer der Ausführungsform der Vorrichtung gemäss Fig. 6 von oben.

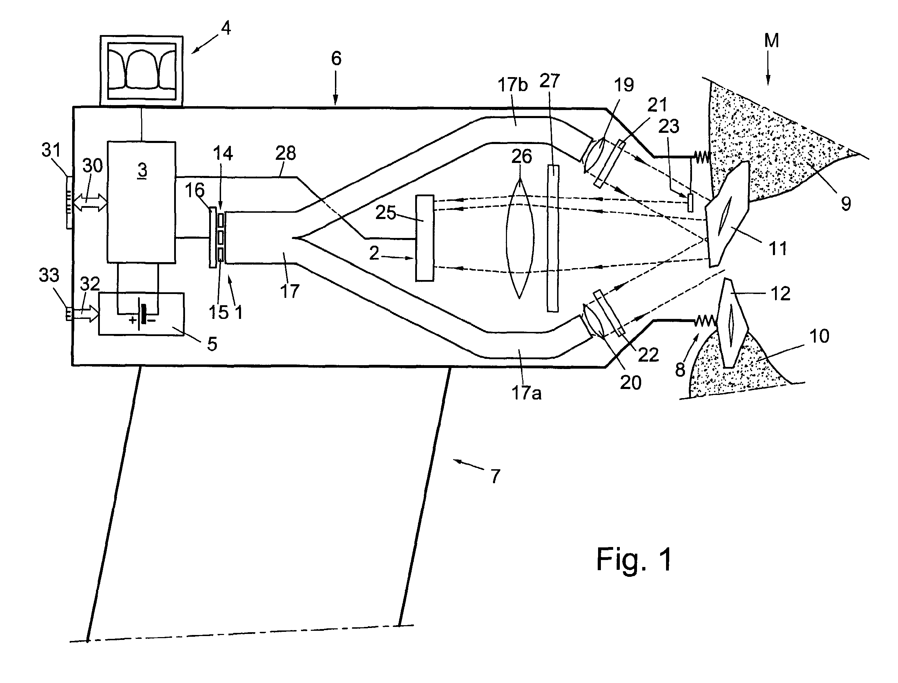

Die schematisch dargestellte Vorrichtung gemäss Fig. 1 besteht im wesentlichen aus einer Beleuchtungseinrichtung 1, einer Erfassungseinrichtung 2, einer Mikroprozessor gesteuerten Steuer- und Auswertelektronik 3, einem Display 4 sowie einer Batterie 5. Die genannten Elemente sind in einem als Sondenkopf 6 ausgebildeten Oberteil aufgenommen. Der Sondenkopf 6 ist auf der Vorderseite mit einem Vorderteil 8 versehen, welcher auf dem Messobjekt M zur Anlage kommt. Die gesamte Vorrichtung ist als autonomes, portables Gerät ausgebildet und mit einem Handgriff 7 versehen. Als Messobjekt M sind schematisch Bereiche des Unter- bzw. Oberkiefers 9, 10 zusammen mit zwei Zähnen 11, 12 dargestellt.

Die Beleuchtungseinrichtung 1 weist als eigentliche Lichtquelle eine Leuchtdiodenanordnung 14 mit einer Vielzahl von Leuchtdioden 15 auf, von denen allerdings nur deren drei schematisch dargestellt sind. Die Leuchtdioden 14 sind auf einer Leiterplatte 16 angeordnet. lngesamt weist die Leuchtdiodenanordnung 14 acht verschiedene Leuchtdiodentypen auf, welche Licht in acht unterschiedlichen Wellenlängenbereichen emittieren. Auf die Leuchtdiodenanordnung 14 wird nachfolgend noch näher eingegangen. Die Beleuchtungseinrichtung 1 umfasst im weiteren ein Lichtleiterfaserbündel 17, in welches das von den Leuchtdioden 15 emittierte Licht eingekoppelt wird. Das Lichtleiterfaserbündel 17 ist Y-förmig in zwei Stränge 17a, 17b aufgeteilt. Die beiden Stränge 17a, 17b des Lichtleiterfaserbündels 17 sind endseitig in einzelne, vorzugsweise kreisringförmig angeordnete Fasern aufgesplittet, um eine möglichst homogene Ausleuchtung des Messobjekts M zu erhalten. Den beiden Lichtleiterfasersträngen 17a, 17b sind Linsen 19, 20 nachgeschaltet, welche zusätzlich zu einer gleichmässigen Ausleuchtung des Messobjekts M beitragen. Auf die den Lichtleiterfasersträngen 17a, 17b nachgeschalteten Linsen 19, 20 folgen Polarisatoren 21, 22, welche ebenfalls nur schematisch dargestellt sind. Schliesslich ist noch eine Referenzmarke 23 ersichtlich, auf deren Bedeutung nachfolgend ebenfalls noch näher eingegangen wird. Anstelle eines Lichtleiterfaserbündels 17 kann beispielsweise auch ein Glasstab eingesetzt werden.

Die Erfassungseinrichtung 2 ist mit einem Erfassungssensor 25 versehen, welcher dem Erfassen des vom Messobjekt M reflektierten Lichts dient. Als Erfassungssensor 25 kommt vorzugsweise ein Schwarz-Weiss-CCD-Chip (Charge Coupled Device) oder ein Schwarz-Weiss-CMOS Bildsensor zum Einsatz. Der Erfassungssensor 25 ist über eine Datenleitung 28 mit der Elektronik 3 verbunden. Um das vom Messobjekt M reflektierte Licht auf den Erfassungssensor 2 zu lenken, ist diesem eine Linse 26 vorgeschaltet. Vor der Linse 26 ist ein Polarisator 27 angeordnet, welcher derart auf die den Lichtleiterfasersträngen 17a, 17b nachgeschalteten Polarisatoren 20, 22 abgestimmt sind, dass er das vom Messobjekt M emittierte Licht passieren lässt, während er als Filter für die von der Oberfläche des Messobjekts M reflektierten Wellen -Oberflächenglanz- wirkt. Dazu weist der dem Erfassungssensor 25 vorgeschaltete Polarisator (27) gegenüber den den Lichtleiterfasersträngen 17a, 17b nachgeschalteten Polarisatoren 20, 22 eine um 90° verdrehte Polarisationsrichtung auf oder allenfalls keine verdrehte Polarisationsrichtung, wobei in diesem Fall die Verdrehung der Polarisation mit einem oder mehreren zusätzlichen Zirkulapolarisatoren erfolgt..

Die Vorrichtung ist im weiteren mit einem Steckanschluss 31 versehen, welcher über eine Datenleitung 30 mit der Elektronik 3 verbunden ist. Über diesen Steckanschluss 31 können bidirektional Daten übermittelt und ausgetauscht werden. Über den Steckanschluss 31 können insbesondere die gemessenen farbmetrischen Daten ausgelesen werden. Im weiteren ist ein Stecker 33 ersichtlich, welche über eine Leitung 32 mit der Batterie verbunden ist und dem Anschluss eines Ladegeräts dient. Es versteht sich, dass der Ausdruck "Batterie" stellvertretend sowohl für herkömmliche Batterien wie auch für alle Arten von aufladbaren Akkumulatoren steht.

Wie bereits erwähnt weist die Leuchtdiodenanordnung 14 acht verschiedene Leuchtdiodentypen auf, welche sichtbares Licht im Sinne eines Monochromators in acht unterschiedlichen, schmalbandigen Wellenlängenbereichen zwischen ca. 430 und 650 Nanometern emittieren, wobei die Wellenlängenbereiche möglichst gleichmässig über den genannten Bereich verteilt sein sollten. Es versteht sich, dass anstelle von acht unterschiedlichen Leuchtdiodentypen auch ein andere Anzahl Leuchtdiodentypen zum Einsatz kommen kann. Die Anzahl der eingesetzten Leuchtdiodentypen hängt u.a. von deren Verfügbarkeit sowie den Anforderungen der Farbmetrik ab. Sollten dereinst LED's mit anderen oder zusätzlichen Wellenlängenbereichen verfügbar sein, so könnte natürlich der gesamte Bereich des sichtbaren Lichts zwischen ca. 380 und 730 Nanometern mittels einer entsprechenden Anzahl an Leuchtdiodentypen abgedeckt werden.

Während für einzelne Wellenlängenbereiche nur eine einzige Leuchtdiode vorgesehen ist, sind für andere Wellenlängenbereiche mehrere, parallel geschaltete Leuchtdioden vorgesehen. Der Grund ist darin zu sehen, dass nicht für alle Wellenlängenbereiche genügend leistungsstarke Leuchtdioden zur Verfügung stehen. Um jedoch trotzdem in allen acht verschiedenen Wellenlängenbereichen Lichtstrom von genügender Intensität in das Lichtleiterfaserbündel 17 einzukoppeln, um genügend Signal-Rauschabstand zu erreichen, werden von den leistungsschwächeren Leuchtdiodentypen so viele Leuchtdioden parallel zu einer Leuchtdiodengruppe angeordnet, bis deren emittierter Gesamtlichtstrom in etwa demjenigen einer leistungsstarken Einzeldiode entspricht.

Die Leuchtdioden 15 werden vorzugsweise mittels Chip-on-Board Technologie ringförmig auf der Platine 16 angeordnet und mittels Bond-Technik mit der entsprechenden Leiterbahn oder Kontaktfläche elektrisch verbunden. Um die Verlustwärme der LED's möglichst gut abführen zu können, kommt vorzugsweise eine Metallkern-Platine zum Einsatz. Die einzelnen LED's werden ohne Gehäuse auf der Leiterplatte befestigt und gebondet, wobei die gesamte Leuchtdiodenanordnung mittels einer Gussmasse, beispielsweise glasklarem Epoxydharz, eingegossen und mittels einer weiteren Masse, beispielsweise einem dauerelastischen Silikongel, optisch an das Lichtleiterfaserbündel 17 angekoppelt wird. Der Durchmesser des Lichtleiterfaserbündels 17 ist auf den Durchmesser der Leuchtdiodenanordnung 14 abgestimmt und beträgt im vorliegenden Fall weniger als zehn Millimeter. Vorzugsweise sind die einzelnen, leistungsstarken Leuchtdioden im Zentrum angeordnet, während die leistungsschwächeren Leuchtdioden an der Peripherie gruppiert angeordnet sind. Um das von der Leuchtdiodenanordnung 14 emittierte Licht möglichst verlustfrei in das nachgeschaltete Lichtleiterfaserbündel 17 einzukoppeln, ist letzteres sehr nahe, d.h. bis auf weniger als ca. einen Millimeter, an die LED's herangeführt. Die Beleuchtungseinrichtung 1 ist vorteilhafterweise derart ausgebildet, dass nicht nur das Messobjekt 7 selber, sondern auch noch die angrenzenden Bereiche des Ober- und Unterkiefers 6a, 6b beleuchtet werden. Aufgrund der durchschnittlichen Grösse eines Zahns sollte eine Fläche von zumindest 10x15 mm, vorzugsweise zumindest 16x22mm beleuchtet werden. Aufgrund der Transluzenz des Messobjekts ist es jedenfalls wichtig, dass die beleuchtete Fläche grösser ist als die für die Bestimmung der Farbvalenz des Messobjekts M erfasste Fläche, also grösser als ein einzelner Zahn.

Für das Durchführen eines Messvorgangs wird zuerst eine Messung ohne Beleuchtung durchgeführt. Der zu diesem Zeitpunkt am Erfassungssensor 25 anstehende Messwert entspricht somit dem von aussen in das Messobjekt M bzw. die Erfassungseinrichtung 2 eingekoppelten Licht (Umgebungslicht). Damit bei den nachfolgenden, mit Beleuchtung durchgeführten Messungen der jeweils am Erfassungssensor 25 anstehende Messwert durch das von aussen eingekoppelte Licht nicht verfälscht wird, wird dieser Dunkelwert jeweils vom eigentlichen Messwert subtrahiert. Danach werden acht Messungen mit Beleuchtung durchgeführt, indem die jeweilige Leuchtdiode bzw. die jeweilige Leuchtdiodengruppe sequentiell angesteuert wird/werden, so dass das Messobjekt M nacheinander mit sichtbarem Licht in acht unterschiedlichen Wellenlängenbereichen beleuchtet wird. Während der Ansteuerung der jeweiligen Leuchtdiode bzw. Leuchtdiodengruppe wird der am Erfassungssensor 25 anstehende Messwert erfasst und abgespeichert. Vorzugsweise werden die jeweiligen Leuchtdiodentypen nur während einer sehr kurzen Zeit mit Strom beaufschlagt, dafür mit einem Mehrfachen des Nennstroms. Beispielsweise werden die LED's nur während ca. 20 Millisekunden mit Strom beaufschlagt, dafür mit dem fünf- bis zehnfachen des vom Hersteller angegebenen Nennstroms. Auf diese Weise kann die gewünschte Lichtintensität erreicht werden, ohne dass die Leuchtdioden 15 dabei Schaden nehmen. Da der von den Leuchtdioden 15 emittierte Lichtstrom gewissen Schwankungen unterliegt bzw. unterliegen kann, wird bei jeder Messung der von der Referenzmarke 23 auf den Erfassungssensor 25 reflektierte Lichtstrom gemessen. Aufgrund des gemessenen Referenz-Wertes kann rechnerisch der emittierte Lichtstrom ermittelt und ggf. eine Korrektur der gemessenen Werte vorgenommen werden. Die Korrekturwerte werden wie folgt berechnet: Wird auf der Referenzfläche der jeweiligen Referenzmarke 23 ein veränderter Lichtwert gemessen, so werden die Messdaten um den Faktor der Veränderung auf der Referenzfläche korrigiert. Obwohl in diesem Beispiel nur eine Referenzmarke 23 dargestellt ist, werden vorzugsweise zwei Referenzmarken eingesetzt. Die Referenzmarken sind dabei möglichst nahe am Vorderteil 8 des Sondenkopfes 6 angeordnet. Um die Grösse des auszuwertenden Bildes durch die beiden Referenzmarken nicht nachhaltig und negativ zu beeinflussen, sind die beiden Referenzmarken vorzugsweise derart positioniert, dass sie nur die Eckbereiche des zu erfassenden Bildes abdecken.

Um eine exakte Positionierung des Sondenkopfs 6 auf dem Messobjekt M zu ermöglichen, wird das Messobjekt M visuell auf dem Display 4 dargestellt. Dazu wird das Messobjekt M sequentiell und in sehr kurzen Zeitabständen in den Wellenlängenbereichen der drei Grundfarben rot, grün und blau beleuchtet. Dabei werden diejenigen drei Leuchtdiodentypen sequentiell angesteuert, welche Licht in den den drei Grundfarben am nächsten kommenden Wellenlängenbereichen emittieren. Aus diesen drei Grundfarben kann dann rechnerisch ein Farbbild zusammengestellt und das Messobjekt in Farbe auf dem Display wiedergegeben werden, wie dies andeutungsweise dargestellt ist.

Um jedoch optimale und noch genauere Messresultate zu erhalten, muss der Sondenkopf der Vorrichtung gegenüber dem Messobjekt derart ausgerichtet sein, dass die optische Achse der Vorrichtung exakt rechtwinklig zur Oberfläche des Messobjekts verläuft. Wen das Messobjekt, wie im vorliegenden Fall, ein Zahn im Mund eines Patienten ist, ist die oben erwähnte exakte Ausrichtung der optischen Achse nicht so leicht zu bewerkstelligen, da die Bedienungsperson den Zahn während des Messvorgangs nicht sehen kann. Eine weitere Schwierigkeit besteht darin, dass die Zähne oft etwas schief im Mund eines Patienten angeordnet sind. Da der Sondenkopf der Vorrichtung gemäss der Erfindung manuell gehandhabt wird, d.h. einfach auf den Mund des Patienten aufgesetzt wird, dessen Zahnfarbe ermittelt werden soll, kann es des öfteren passieren, dass Messungen vorgenommen werden, die mit einem zu grossen Winkelfehler behaftet sind; tolerierbar sind dabei Winkelfehler in der Grössenordnung von ±10°. Solche Winkelfehler treten meistens in der Vertikalebene auf, d.h. der Sondenkopf wird etwas gegen oben geneigt oder etwas gegen unten geneigt aufgesetzt.

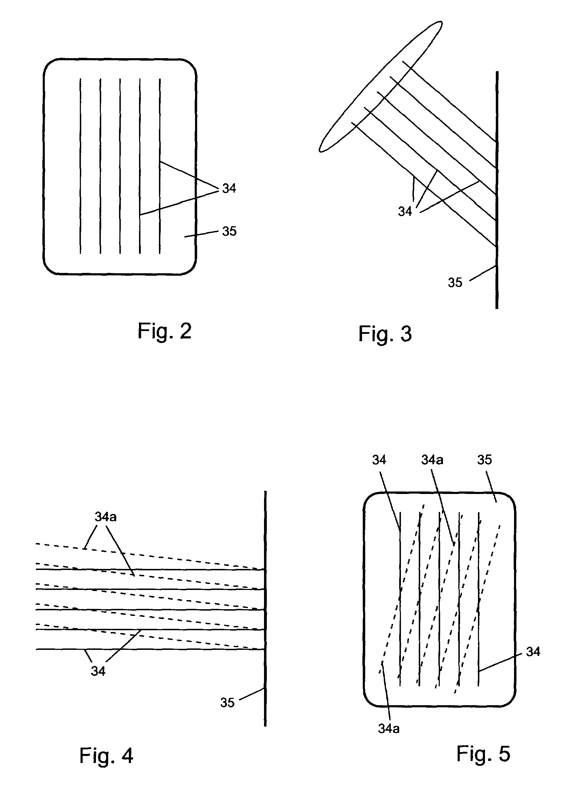

Bei einem weiteren Ausführungsbeispiel der vorliegenden Erfindung wird diesem Problem insofern Rechnung getragen, indem ein möglicher Winkelfehler beim Positionieren des Sondenkopfs 6 visualisiert wird, so dass die Position bzw. Ausrichtung des Sondenkopfs 6 der Vorrichtung leicht korrigiert werden kann, bevor die Messung durchgeführt wird. Zu diesem Zweck ist in diesem weiteren Ausführungsbeispiel eine erweiterte Beleuchtungsvorrichtung vorgesehen, von der die wesentlichen Teile schematisch in Fig. 3 dargestellt sind, um unter einem Winkel von 45° ein Linienmuster auf die Oberfläche des Messobjekts M zu projizieren. Wie aus Fig. 2 zu sehen ist, verlaufen die parallelen Linien 34 des Linienmusters vertikal auf der Oberfläche des Messobjekts 35.

Wenn der Sondenkopf 6 der Vorrichtung, wie in Fig. 4 durch gestrichelte Linien 34a angedeutet ist, unter einem falschen Winkel aufgesetzt wird, ist das resultierende Linienmuster 34a auf der Oberfläche des Messobjekts 35 gegenüber dem vertikalen Linienmuster 34, erzeugt durch einen korrekt aufgesetzten Sondenkopf 6, geneigt.

Das Linienmuster 34 bzw. 34a kann mit Hilfe der 26 und des Sensors 25 auf dem Display 4 (Fig. 1) sichtbar gemacht werden. Auf diese Weise kann die Bedienungsperson die Position und Ausrichtung des Sondenkopfs 6 korrigieren. Ausserdem kann das vom Sensor 25 empfangene Bild des Linienmusters durch das Steuer- und Auswertegerät 3 weiterverarbeitet werden, um den Winkelfehler auf der Grundlage des Verlaufs der Linien 34a, die auf die Oberfläche des Messobjekts projiziert werden, zu berechnen. Die Abweichung des Verlaufs der Linien 34a von der horizontalen Richtung ist dabei direkt proportional zur Abweichung der optischen Achse des Sondenkopfs von der gewünschten Richtung. Somit kann das Steuer- und Auswertegerät 3 eine Aussage liefern, die es der Bedienungsperson erlaubt, die Position bzw. Ausrichtung des Sondenkopfs 6 zu korrigieren.

In der eingangs beschriebenen und im Zusammenhang mit Fig. 1 näher erläuterten Vorrichtung ist bereits eine Beleuchtungseinrichtung 1 vorhanden, die es erlaubt, die Farbvalenz des Messobjekts zu bestimmen und das Messobjekt unter einem Winkel von 45° zu beleuchten. Somit bietet es sich an, zumindest Teile dieser Beleuchtungseinrichtung 1 dazu zu verwenden, zusätzlich das Linienmuster 34 auf das Messobjekt 35 zu projizieren. Um dabei, d.h. durch das Aufprojizieren des Linienmusters 34 auf die Oberfläche des Messobjekts 35, die kolorimetrische Analyse des Messobjekts nicht zu stören, - für die kolorimetrische Messung muss die Beleuchtung homogen sein -, wird der Linienmuster z.B. im Bereich von Infrarotstrahlung erzeugt.

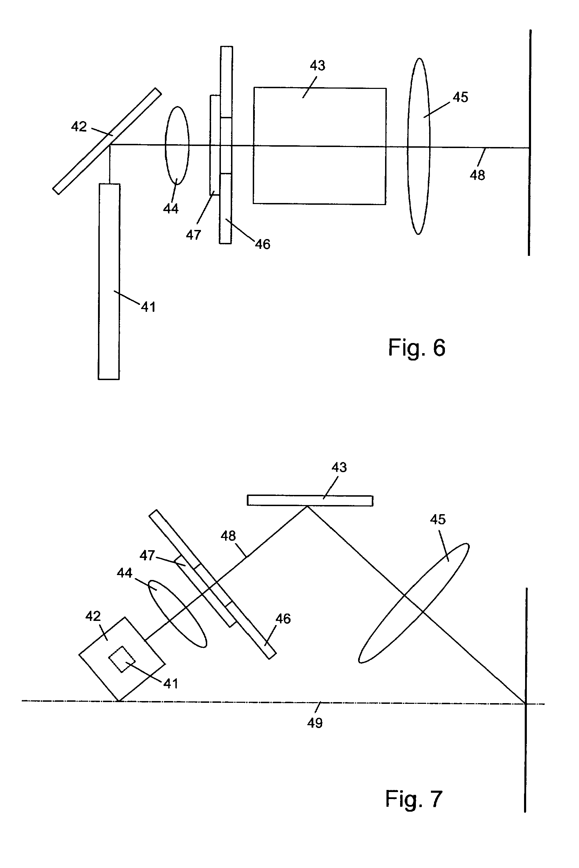

Eine alternative Beleuchtungseinrichtung ist in Fig. 6 in einer schematischen Seitenansicht und in Fig. 7 in einer schematischen Ansicht von oben dargestellt. Sie umfasst eine Homogenisiereinrichtung 41, z.B. einen Glasstab oder ein Lichtfaserbündel, einen ersten Umlenkspiegel 42, einen zweiten Umlenkspiegel 43, eine erste Linse 44, eine zweite Linse 45, eine Schlitzblende 46 und einen Filter 47. Der Strahlungspfad ist durch die Line 48 angedeutet, und die strichpunktierte Linie in Fig. 7 symbolisiert die Symmetrieebene. Es versteht sich, dass ausserdem die für die Messung der Farbvalenz erforderlichen Teile und Elemente vorhanden sind, die eingangs im Zusammenhang mit Fig. 1 diskutiert worden sind,

Verglichen mit der Beleuchtungseinrichtung 1 gemäss Fig. 1 zeigt die Beleuchtungseinrichtung gemäss Fig. 6 und 7 die folgenden Unterschiede:

Die Leuchtdiodenanordnung 14 (nicht dargestellt in den Fig. 6 und 7) umfasst zusätzlich zumindest eine weitere Leuchtdiode die Licht im nahen Infrarotbereich ausstrahlt, d.h. mit einer Wellenlänge von ca. 850 nm. Das Licht, das diese weitere oder diese weiteren Leuchtdiode(n) aussenden, wird ebenfalls in den Glasstab bzw. das Lichtleiterbündel 41 eingekoppelt. Ausserdem wird neben den zuvor erwähnten, acht aufeinander folgenden Messungen noch eine weitere Messung mit Beleuchtung durch die zusätzliche IR-Leuchtdiode bzw. die zusätzlichen IR-Leuchtdioden durchgeführt.

Das Lichtfaserbündel 41 ist in diesem Ausführungsbeispiel nicht in zwei Stränge 17a, 17b aufgeteilt wie beim Ausführungsbeispiel gemäss Fig. 1. Vielmehr wird der Lichtstrahl, der das Lichtfaserbündel 41 verlässt, mittels des ersten Umlenkspiegels 42 um 90° umgelenkt. Die Vorderseite des Umlenkspiegels 42 ist mit einer sogenannten Kaltlichtspiegelschicht versehen. Eine solche Schicht wirkt als Spiegel für das sichtbare Licht, ist aber für IR-Licht transparent. Die Rückseite des Spiegels 42 ist mit einem Linienmuster versehen, welches Infrarotstrahlung reflektiert. Somit wird das Linienmuster durch die vorderseitige Beschichtung des Spiegels 42 hindurch, die ja für IR transparent ist, über den zweiten Umlenkspiegel 43 und die Linse 45 auf das Messobjekt 35 projiziert. Das Linienmuster ist dabei so ausgerichtet, das es auf der Oberfläche des Messobjekts in vertikaler Richtung verläuft, wie es in den Fig. 2 und 5 angedeutet ist.

Um sicherzustellen, dass das Linienmuster auf der Oberfläche des Messobjekts 35 scharf abgebildet wird, ist eine Blenden/Filter-Kombination 46, 47 in den Lichtpfad 48 eingefügt. Dies ist erforderlich, weil das reflektierende Linienmuster auf der Hinterseite des Spiegels 42 optisch nicht exakt an der richtigen Stelle ist, was zu einem unscharfen Bild des Linienmusters auf der Oberfläche des Messobjekts führen würde. Durch die Schlitzblende 46 wird die Tiefenschärfe so weit erhöht, dass ein scharfes Abbild des Linienmusters auf der Oberfläche des Messobjekts sichergestellt ist.

Wiederum ist die Schlitzblende 46 so konstruiert, dass sie für sichtbares Licht keine Wirkung zeigt, d.h. transparent ist, um Lichtverluste bei der eigentlichen kolorimetrischen Messung zu vermeiden. Dies wird wiederum durch eine sogenannten Kaltlichtspiegelschicht auf der Oberfläche der Schlitzblende erreicht, die aber einen zentralen Schlitz besitzt. Somit kann das für die eigentliche Messung wesentliche, sichtbare Licht ungehindert durch die Blenden/Filter-Kombination 45, 46 durchtreten, während das infrarote Licht nur durch den Schlitz durchtreten kann. Falls es dennoch geschehen sollte, dass Spuren des Linienmusters im Bereich des sichtbaren Lichts auftreten, weil die Kaltlichtspiegelschicht nicht perfekt ist, ist das nicht weiter schlimm bzw. für die Messung unschädlich, da diese Spuren völlig unscharf wären.

Es versteht sich dass die Beleuchtungseinrichtung gemäss Fig. 6 und 7 bezüglich der Linie 49 generell symmetrisch aufgebaut ist. Allerdings erfolgt die Projektion des Linienmusters auf die Oberfläche des Messobjekts 35 vorzugsweise nur von einer Seite aus. Somit ist die zu der in Fig. 7 gezeigten Anordnung symmetrische Anordnung geringfügig verschieden. Namentlich besitzt der erste Umlenkspiegel 42 auf seiner Rückseite keine reflektierende Schicht in Form eines Linienmusters. Daher wird von jener Seite aus auch kein Linienmuster auf die Oberfläche des Messobjekts 35 projiziert. Ausserdem ist die Anordnung 45, 46 ein Kaltlichtspiegel ohne Schlitz und somit nicht transparent für Infrarotlicht. Folglich gelangt Licht mit einer Wellenlänge im Infrarot-Bereich nur von einer Seite her auf die Oberfläche des Messobjekts 35, während sichtbares Licht von beiden Seiten her auf die Oberfläche des Messobjekts projiziert wird.

Auch wenn im Zusammenhang mit den hiervor diskutierten Ausführungsbeispielen stets von einem Lichtleitbündel gesprochen wurde, versteht es sich, dass auch andere geeignete Homogenisierungseinrichtungen verwendet werden können, namentlich Glasstäbe oder solche aus optisch transparentem Kunststoff. Eine andere Möglichkeit besteht im Rahmen der vorliegenden Erfindung darin, anstatt IR-Licht eine Strahlung im Bereich von Ultraviolett zur Projektion des Linienmusters auf die Oberfläche des Messobjekts zu verwenden. Wichtig ist jedenfalls, dass eine Strahlung verwendet wird mit einer Wellenlänge, die ausserhalb des sichtbaren Bereichs liegt, damit die Messung der Farbvalenz, die ja mit sichtbarem Licht erfolgt, durch das Aufprojizieren des Linienmusters nicht beeinträchtigt wird.

## Patentansprüche

1. Vorrichtung zur Bestimmung der Farbvalenz von transluzenten Objekten (M), insbesondere Zähnen (11, 12), mit einer Beleuchtungseinrichtung (1) zum Beleuchten des Messobjekts (M) in unterschiedlichen Wellenlängenbereichen sowie einer Erfassungseinrichtung (2) zum Erfassen des vom Messkörpers (M) reflektierten Lichts **dadurch gekennzeichnet, dass** die Beleuchtungseinrichtung (1) eine Leuchtdiodenanordnung (14) mit einer Vielzahl von sequentiell ansteuerbaren Leuchtdioden (15) umfasst, welche Licht in unterschiedlichen Wellenlängenbereichen emittieren.

2. Vorrichtung nach Anspruch 1, **dadurch gekennzeichnet, dass** die Leuchtdiodenanordnung (14) zumindest sechs unterschiedliche Leuchtdiodentypen umfasst, welche sichtbares Licht in unterschiedlichen Wellenlängenbereichen emittieren, wobei die einzelnen Leuchtdiodentypen sequentiell angesteuert werden.

3. Vorrichtung nach Anspruch 1 oder 2, **dadurch gekennzeichnet, dass** die Leuchtdioden (14) kreisförmig angeordnet sind.

4. Vorrichtung nach einem der vorhergehenden Ansprüche, **dadurch gekennzeichnet, dass** die Leuchtdioden (15) mittels Chip-On-Board Technologie auf einer Metallkern-Platine (16) angeordnet sind.

5. Vorrichtung nach einem der Ansprüche 2 bis 4, **dadurch gekennzeichnet, dass** die einzelnen Leuchtdiodentypen sichtbares Licht in einem relativen Wellenlängenbereich zwischen 25 und 100 nm emittieren.

6. Vorrichtung nach einem der vorhergehenden Ansprüche, **dadurch gekennzeichnet, dass** für einzelne Wellenlängenbereiche mehrere parallel angesteuerte oder parallel geschaltete Leuchtdioden (15) vorgesehen sind.

7. Vorrichtung nach einem der Ansprüche 2 bis 6, **dadurch gekennzeichnet, dass** die Erfassungseinrichtung (2) zumindest einen schwarz-weiss Bildsensor (25) zum Erfassen der einzelnen Wellenlängenbereiche aufweist und das Messobjekt (M) sequentiell mittels drei unterschiedlichen Leuchtdiodentypen in den drei die Grundfarben rot, grün und blau bestimmenden Wellenlängenbereichen belichtet wird, wobei die drei mittels des Bildsensors (25) empfangenen Wellenlängenbereiche auf einer Anzeige (4) jeweils als Farbbild zur Positionierung der Vorrichtung auf dem Messobjekt (M) dargestellt werden.

8. Vorrichtung nach einem der vorhergehenden Ansprüche, **dadurch gekennzeichnet, dass** das von der Leuchtdiodenanordnung (14) emittierte Licht in ein Lichtleiterfaserbündel (17) oder einen Glasstab eingekoppelt und über eine Optik (26) derart auf das Messobjekt (M) projiziert wird, dass eine Fläche von zumindest 10x15 mm gleichmässig und flächig beleuchtet wird.

9. Vorrichtung nach Anspruch 8, **dadurch gekennzeichnet, dass** dem Lichtleiterfaserbündel (17) oder dem Glasstab zumindest ein Polarisator (20, 22) nachgeschaltet ist.

10. Vorrichtung nach Anspruch 9, **dadurch gekennzeichnet, dass** die Erfassungseinrichtung (2) zumindest einen Bildsensor (25) aufweist, welchem zumindest ein Polarisator (27) vorgeschaltet ist, welcher derart auf den dem Lichtleiterfaserbündel (17) nachgeschalteten Polarisator (20, 22) abgestimmt ist, dass er das vom Messobjekt (M) emittierte Licht passieren lässt, während er als Filter für das von der Oberfläche des Messobjekts (M) reflektierte Licht wirkt.

11. Vorrichtung nach einem der vorhergehenden Ansprüche, **dadurch gekennzeichnet, dass** die Vorrichtung als portables Gerät ausgebildet ist und mit Batterien zur Speisung versehen ist.

12. Vorrichtung nach einem der vorhergehenden Ansprüche, **dadurch gekennzeichnet, dass** die Beleuchtungseinrichtung eine Vorrichtung zum Projizieren eines Linienmusters auf das Messobjekt (M) umfasst.

13. Vorrichtung nach einem oder mehreren der vorhergehenden Ansprüche, **dadurch gekennzeichnet, dass** die Leuchtdiodenanordnung (14) des weiteren zumindest Leuchtdiode umfasst, die Infrarot- oder UV-Strahlung aussendet.

14. Vorrichtung nach Anspruch 13, **dadurch gekennzeichnet, dass** die IR-Leuchtdiode IR-Strahlung im Bereich von 850 nm aussendet.

15. Vorrichtung nach Anspruch 13 oder 14, **dadurch gekennzeichnet, dass** mehrere parallel geschaltete oder parallel angesteuerte IR-Leuchtdioden vorgesehen sind.

16. Vorrichtung nach Anspruch 12, **dadurch gekennzeichnet, dass** die Vorrichtung zum Projizieren eines Linienmusters auf das Messobjekt (M) einen Umlenkspiegel umfasst, der auf seiner Vorderseite mit einer Beschichtung versehen ist, die sichtbares Licht reflektiert, für IR-Strahlung jedoch transparent ist, und der auf seiner Rückseite mit einem Linienmuster versehen ist, welches IR-Strahlung reflektiert.

17. Vorrichtung nach Ansprüchen 12 und 13, **dadurch gekennzeichnet, dass** die Vorrichtung zum Projizieren eines Linienmusters auf das Messobjekt (M) eine Schlitzblende umfasst, die in den Lichtpfad nach dem Umlenkspiegel eingefügt ist und die für sichtbares Licht transparent ist.

18. Verfahren zum Betrieb der Vorrichtung nach einem der vorhergehenden Ansprüche, **dadurch gekennzeichnet, dass** die einzelnen Leuchtdiodentypen sequentiell angesteuert werden.

19. Verfahren nach Anspruch 18, **dadurch gekennzeichnet, dass** die einzelnen Leuchtdioden während 10 bis 30 ms mit einem Vielfachen des Nennstroms gespeist werden.

20. Verfahren nach Anspruch 18 oder 19, **dadurch gekennzeichnet, dass** die einzelnen Leuchtdiodentypen in Abhängigkeit ihres Wirkungsgrades und/oder ihrer Strombelastbarkeit individuell mit Strom beaufschlagt werden.

21. Verfahren nach einem der Ansprüche 18 bis 20, **dadurch gekennzeichnet, dass** sowohl das von den Leuchtdioden emittierte Licht wie auch das vom Messobjekt reflektierte Licht polarisiert wird, wobei die Polarisationsrichtung zwecks Glanzunterdrückung des von der Oberfläche des Messobjekts reflektierten Licht unterschiedlich ist.

22. Verfahren nach einem der Ansprüche 18 bis 21, **dadurch gekennzeichnet, dass** eine Fläche beleuchtet wird, welche grösser ist als die vom Bildsensor (25) erfasste und für die Bestimmung der Farbvalenz massgebende Fläche.

23. Verfahren nach einem der Ansprüche 18 bis 22, **dadurch gekennzeichnet, dass** das Messobjekt (M) sequentiell mittels drei unterschiedlichen Leuchtdiodentypen in den drei die Grundfarben rot, grün und blau bestimmenden Wellenlängenbereichen belichtet wird, wobei die drei mittels des Bildsensors (25) empfangenen Wellenlängenbereiche rechnerisch zu einem Farbbild aufbereitet und auf einer Anzeige (4) zur Positionierung des Sondenkopfs (6) auf dem Messobjekt (M) dargestellt wird.
